Europäisches Patentamt

European Patent Office

Office européen des brevets

(11) Veröffentlichungsnummer: **0 176 840 B1**

## (12) EUROPÄISCHE PATENTSCHRIFT

(45) Veröffentlichungstag der Patentschrift: **12.06.91**

(51) Int. Cl.5: **G01B 7/03**, G01B 7/00

(21) Anmeldenummer: **85111637.6**

(22) Anmeldetag: **14.09.85**

(54) **Verfahren und Vorrichtung zur Positionsbestimmung eines induktiven Messaufnehmers auf einem Messtisch.**

(30) Priorität: **05.10.84 DE 3436639**

(43) Veröffentlichungstag der Anmeldung:
**09.04.86 Patentblatt 86/15**

(45) Bekanntmachung des Hinweises auf die
Patenterteilung:
**12.06.91 Patentblatt 91/24**

(84) Benannte Vertragsstaaten:
**CH DE FR GB IT LI**

(56) Entgegenhaltungen:
**DE-A- 2 320 931**
**DE-A- 3 243 712**
**DE-A- 3 402 905**
**US-A- 4 514 688**

(73) Patentinhaber: **KONTRON ELEKTRONIK GMBH**
**Oskar-von-Miller-Strasse 1**
**W-8057 Eching(DE)**

(72) Erfinder: **Jacob-Grinschgl, Wolfgang**
**Rumfordstrasse 40**
**W-8000 München(DE)**
Erfinder: **Müller, Udo**
**Furtweg 20b**
**W-8044 Unterschleissheim(DE)**

(74) Vertreter: **Dirscherl, Josef et al**
**c/o Bayerische Motoren Werke Aktiengesell-**
**schaft, Patentabteilung AJ-3, Postfach 40 02**
**40, Petuelring 130**
**W-8000 München 40(DE)**

EP 0 176 840 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Positionsbestimmung eines induktiven Meßaufnehmers auf einem Meßtisch, der für jede Koordinate mit einer Anzahl in festgelegten Abständen voneinander angeordneter Stromleiter versehen ist.

Bei einem bekannten derartigen Verfahren werden die Stromleiter in vorbestimmter Folge und Richtung von gleichen Strömen durchflossen, wobei aus dem von dem Meßaufnehmer gelieferten Meßsignal ein für die Positionsbestimmung in der betreffenden Koordinate verwendeter Meßwert erzeugt wird.

Es ist ferner ein Verfahren der eingangs genannten Art bekannt, bei dem dem Meßaufnehmer eine Stromsignalfolge zugeführt wird und die von dieser in den Stromleitern erzeugten Induktionssignale abgetastet werden und aus diesen Induktionssignalen eine Induktionssignal-Zeitfunktion gebildet wird, aus der ein für die Positionsbestimmung des Meßaufnehmers in der betreffenden Koordinate verwendeter Meßwert erzeugt wird.

Es hat sich jedoch gezeigt, daß sich mit diesem Verfahren nur eine begrenzte Genauigkeit der Ortsbestimmung erreichen läßt.

Der Erfindung liegt die Aufgabe zugrunde, ein Verfahren und eine Schaltung zu schaffen, mit der sich eine größere Genauigkeit der Ortsbestimmung erzielen läßt sowie eine größere Unabhängigkeit von der Höhe des Meßaufnehmers über dem Meßtisch.

Ausgehend von dem erstgenannten bekannten Verfahren ist die Lösung dieser Aufgabe darin zu sehen, daß ein der zweiten Ableitung der Hüllkurve des zeitlichen Verlaufs des den Meßaufnehmer durchsetzenden Magnetflusses entsprechendes Wendepunktsignal gebildet wird und daß der Zeitabstand des zweiten Durchgangs dieses Wendepunktsignals durch einen nahe Null gelegenen Pegel von einem in Abhängigkeit vom Beginn der Speisung der Stromleiter gestarteten Referenzsignal als Maß für die Position des Meßaufnehmers in der betreffenden Koordinatenrichtung verwendet wird.

Ausgehend von dem an zweiter Stelle beschriebenen bekannten Verfahren besteht die Lösung darin, dar ein der zweiten Ableitung der Hüllkurve der Induktionssignal-Zeitfunktion entsprechendes Wendepunktsignal gebildet wird und daß der Abstand des zweiten Durchganges dieses Wendepunktsignals durch einen nahe Null gelegenen Pegel von einem in Abhängigkeit vom Beginn der Abtastung der Stromleiter gestarteten Referenzsignal als Maß für die Position des Meßaufnehmers in der betreffenden Koordinatenrichtung verwendet wird wie in Anspruch 1 definiert.

Gemäß einer besonderen Durchführungsform wird der Zeitabstand des zweiten Nulldurchganges des Wendepunktsignals von dem Referenzsignal als Maß für die Position verwendet.

Bei einem Verfahren, bei dem aus der Hüllkurve ein der ersten Ableitung der Hüllkurve entsprechendes differenziertes Signal gebildet wird, ist eine vorteilhafte Verfahrensvariante darin zu sehen, daß der zweite Durchgang des Wendepunktsignals durch einen nahe Null gelegenen Pegel in der Weise bestimmt wird, daß der erste Durchgang des Wendepunktsignals durch diesen Pegel in dem Zeitraum bestimmt wird, in dem das differenzierte Signal eine Amplitude hat, die oberhalb eines vorher festgelegten Schwellwertes liegt.

Es hat sich gezeigt, daß sich durch ein derartiges Meßverfahren eine sehr genaue Koordinatenbestimmung eines Meßaufnehmers erreichenläßt herab bis zu einer Ortsabweichung von der Ist-Position von etwa 20 $\mu$m.

Ausgehend von einer Schaltung zur Positionsbestimmung eines induktiven Meßaufnehmers auf einem Meßtisch, der für jede Koordinate mit einer Anzahl in festgelegten Abständen voneinander angeordneter Stromleiter versehen ist, mit einer Schalteinrichtung zum Anschalten der Stromleiter in vorbestimmter Folge und Richtung an einen Leitungskreis, mit einer Erregerschaltung zum Erzeugen einer Folge von Magnetflußimpulsen durch den Meßaufnehmer oder die Stromleiter, und mit einer Auswerteschaltung zum Erzeugen des einmal differenzierten Signals der Hüllkurve der die Magnetflußimpulse repräsentierenden Teile der in den Stromleitern bzw. dem Meßaufnehmer induzierten Induktionsspannung zeichnet sich die erfindungsgemäße Schaltung dadurch aus, daß die Auswerteschaltung eine zweite Differenzierschaltung umfaßt, der das differenzierte Signal zugeleitet wird und die ein Wendepunktsignal bildet, welches der zweiten Ableitung der Hüllkurve entspricht, sowie ferner eine Meßvorrichtung zum Messen des Zeitabstandes des zweiten Durchganges des Wendepunktsignals durch einen nahe Null gelegenen Pegel von einem Referenzzeitpunkt, der einen festen Zeitabstand vom Beginn der Magnetflußimpulsfolge hat, und daß der von der Meßvorrichtung gemessene Zeitabstand als Maß für die Position verwendet wird wie in Anspruch 6 definiert.

Die Meßvorrichtung kann so ausgebildet sein, daß sie den Zeitabstand des zweiten Nulldurchganges des Wendepunktsignals von dem Referenzzeitpunkt mißt. Diese Messung bringt im allgemeinen genügend genaue Ergebnisse.

Eine besonders vorteilhafte Ausführungsform einer Schaltung ist darin zu sehen, daß die Meßvorrichtung eine von dem differenzierten Signal gesteuerte Freigabeschaltung aufweist, die nur so lange durchgeschaltet ist, wie die Amplitude des differenzierten Signals einen bestimmten Schwellwert überschreitet, sowie ferner einen Taktgeber, einen Zähler für die Taktimpulse des Taktgebers, eine Startschaltung, die in einem festen Zeitabstand vom Beginn der Erzeugung der Magnetflußimpulse die Taktimpulse zu dem Zähler freigibt, durch eine Diskriminatorschaltung, die ein Stoppsignal für den Zähler jedesmal dann erzeugt, wenn das Wendepunktsignal einen vorher festgelegten, nahe Null liegenden Pegel durchläuft und wenn die Freigabeschaltung durchgeschaltet ist, sowie eine Anzeige- oder Speichereinrichtung für den Zählwert.

Die Diskriminatorschaltung kann dabei so ausgebildet sein, daß ein Stoppsignal beim Nulldurchgang des Wendepunktsignals erzeugt wird. Dieses Stoppsignal wird beim ersten Nulldurchgang noch nicht wirksam, da die Freigabeschaltung noch nicht freigegeben ist und der Zähler daher noch weiter zählt.

Eine Steigerung der Meßgenauigkeit läßt sich dadurch erreichen, daß die Diskriminatorschaltung so ausgebildet ist, daß ein Stoppsignal bei Gleichheit des Wendepunktsignals mit einem synchron zur Aktivierung der Stromleiter fluktuierenden Signal erzeugt wird.

Die Differenzierschaltungen können als Bandpässe ausgebildet sein. Dies hat den Vorteil, daß die Rausch- und Störsignale verringert werden.

Gemäß einer Weiterbildung ist der Schwellwert auf einen Wert zwischen 10 und 60% des Maximums der zweiten Halbwelle des differenzierten Signals eingestellt.

Die Erfindung ist im folgenden anhand schematischer Zeichnungen an einem Ausführungsbeispiel ergänzend beschrieben.

Fig. 1    zeigt eine Schaltung für die Messung der Position eines Meßaufnehmers auf einem Meßtisch in einer Koordinate;

Fig. 2    zeigt den Magnetfluß durch die Meßwertaufnehmerspule als Funktion der Zeit;

Fig. 3    zeigt den Verlauf der Induktionsspannung in der Spule des Meßaufnehmers;

Fig. 4    zeigt den Verlauf des differenzierten Signals, und

Fig. 5    zeigt den Verlauf des Wendepunktsignals.

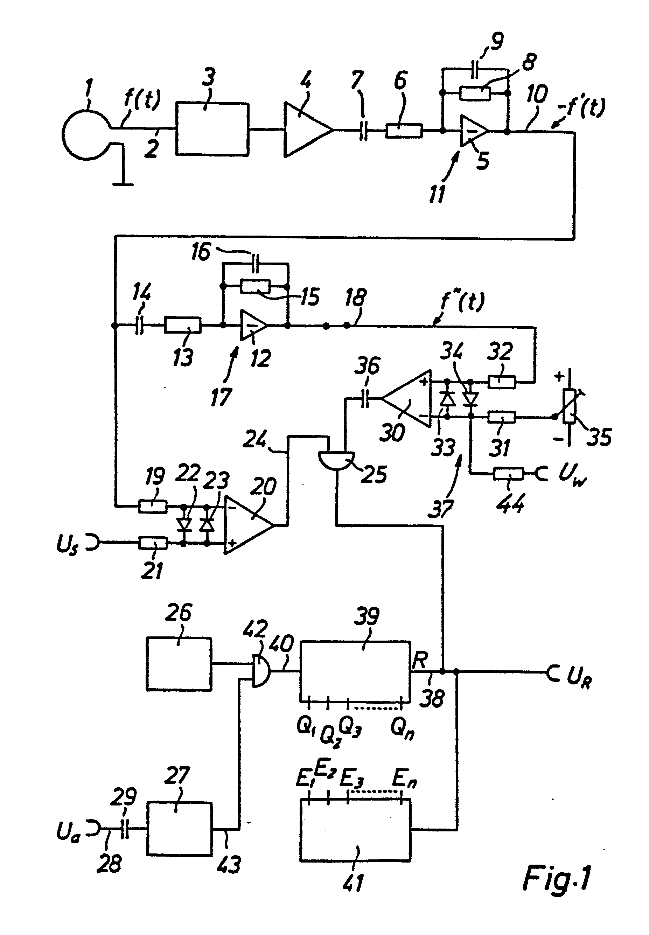

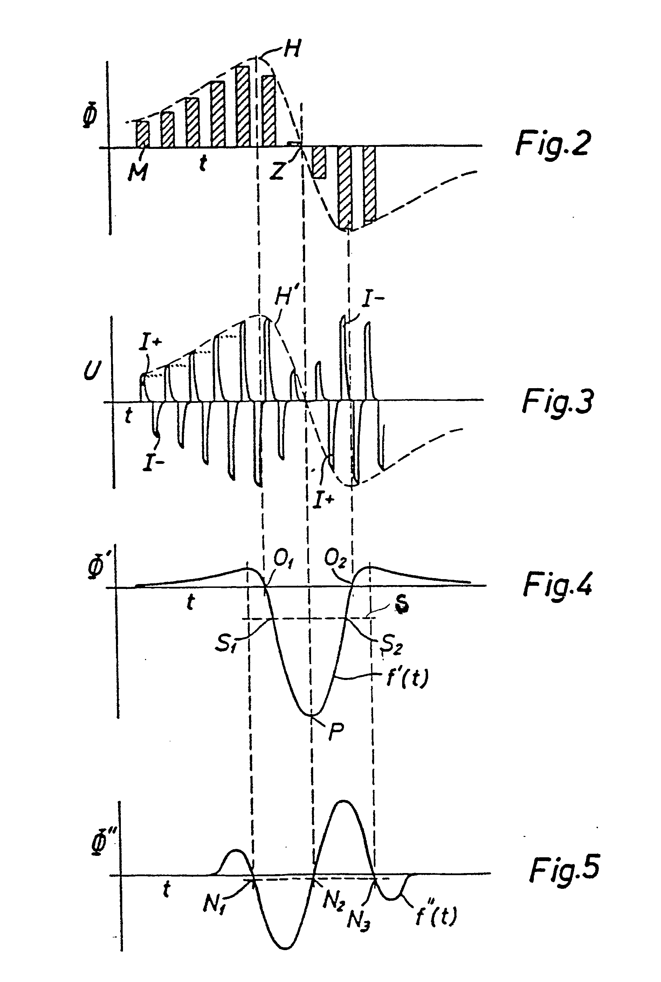

Die in Fig. 1 dargestellte Schaltung zum Messen der Position des Meßaufnehmers auf dem Meßtisch in einer Koordinate empfängt von der Wicklung 1 eines Meßaufnehmers auf der Leitung 2 ein Meßsignal, dessen Größe durch die zeitliche Änderung des durch die Wicklung 1 fließenden Magnetflusses bestimmt wird. Dieser Magnetfluß wird durch die der betreffenden Koordinatenrichtung zugeordneten, parallel und im Abstand voneinander angeordneten Gitterleitungen eines Meßtisches erzeugt, die in einer vorbestimmten Reihenfolge von Stromimpulsen durchflossen werden. Die Querschnittsfläche der Wicklung 1 wird daher von einem Magnetfluß durchsetzt, der in Fig. 2 dargestellt ist. In dem dargestellten Beispiel ist der durch den Stromfluß in den einzelnen Gitterleitungen erzeugte Magnetfluß $\Phi$ als Funktion der Zeit aufgetragen. Die Dauer des Magnetflusses ist gleich der Dauer des Stromflusses, und die Höhe des Magnetflusses hängt ab von der Entfernung des die Wicklung 1 enthaltenden Meßaufnehmers von der jeweils von Strom durchflossenen Gitterleitung. Man erkennt, daß der Magnetfluß allmählich ansteigt und nach Überschreiten eines Maximums an der Steile Z durch O geht. Dieser Nulldurchgang des Magnetflusses entspricht einer Position des Meßaufnehmers auf dem Meßtisch, bei dem der elektrische Mittelpunkt der Wicklung 1 symmetrisch zu den Gitterleitungen liegt.

Durch den in Fig. 2 schraffiert dargestellten Magnetfluß wird eine Spannung f(t) in der Wicklung 1 induziert, deren Verlauf in Fig. 3 dargestellt ist. Jeder der in Fig. 2 dargestellten Magnetflußimpulse M erzeugt durch die Anstiegsflanke einen Spannungsimpuls I+ von einer Polarität und durch die Abstiegsflanke einen Spannungsimpuls I- von gleicher Größe, jedoch entgegengesetzter Polarität. Wie weiter unten noch beschrieben ist, läßt sich z.B. durch eine Sample and Hold-Schaltung (Abtastspeicherschaltung) erreichen, daß lediglich die den Anstiegsflanken der Magnetimpulse entsprechenden Spannungsimpulse I+ zur Weiterverarbeitung freigegeben werden. Derartige Sample and Hold-Schaltungen sind Stand der Technik und weithin bekannt und daher im einzelnen nicht weiter beschrieben.

Wie in Fig. 1 dargestellt, gelangt das Meßsignal von der Wicklung 1 über die Leitung 2 an die Sample and Hold-Schaltung 3, an deren Ausgang also eine Reihe von Impulsen auftreten, deren Höhe gleich den Spannungsimpulsen I+ von Fig. 3 ist, die also praktisch der Höhe der Magnetflußimpulse M entsprechen, deren Breite jedoch bis zum Beginn des nächsten Impulses reicht, wie in Fig. 3 durch punktierte Linien angedeutet ist. Zur Glättung dieses Spannungsverlaufs dient ein Tiefpaß 4, dessen Grenzfrequenz tiefer liegt als die Wiederholungsrate der Magnetflußimpulse M. Am Ausgang des Tiefpasses 4 ergibt sich daher eine Spannung, die in ihrem Verlauf der in Fig. 2 dargestellten Hüllkurve H entspricht.

An den Ausgang des Tiefpasses 4 ist ein Bandpaß angeschlossen, der einen Operationsverstärker 5 umfaßt, dessen N-Eingang einerseits über die Serienschaltung eines Widerstandes 6 und eines Kondensators 7 mit dem Ausgang des Tiefpasses 4 verbunden ist und andererseits über die Parallelschaltung eines Widerstandes 8 und eines Kondensators 9 mit seinem eigenen Ausgang. Bei geeigneter Wahl der Größe der Widerstände 6 und 8 und der Kondensatoren 7 und 9 hat ein derartiger Bandpaß eine Flankensteilheit von 6 db bis zu einer maximalen Kreisfrequenz, die deutlich kleiner ist als der Kehrwert der Zeitkonstante aus dem Widerstand 6 und dem Kondensator 7. Die Zeitkonstante des Widerstandes 8 in Verbindung mit dem Kondensator 9 kann von gleicher Größe sein.

Am Ausgang 10 des Bandpasses entsteht daher eine Spannung, die der ersten Ableitung der in Fig. 2 dargestellten Hüllkurve H entspricht und die in Fig. 4 dargestellt ist. Dieses Signal ist im folgenden differenziertes Signal genannt und mit f'(t) bezeichnet.

Man erkennt aus Fig. 4, daß das differenzierte Signal zwei Nulldurchgänge hat, und zwar einen ersten Nulldurchgang $O_1$, der zeitlich an der Stelle des ersten Maximums der Hüllkurve H von Fig. 2 liegt, sowie einen zweiten Nulldurchgang $O_2$, der zeitlich mit dem zweiten Maximum der Hüllkurve H zusammenfällt. Zwischen diesen beiden Nulldurchgängen hat das differenzierte Signal einen Verlauf, der einer Halbwelle einer Sinusschwingung ähnelt. Das Maximum P dieses Signalabschnitts fällt zeitlich mit dem Wendepunkt der Hüllkurve H zusammen.

An den Ausgang 10 des Bandpasses 11 ist ein zweiter Bandpaß 17 angeschaltet, der aus einem Operationsverstärker 12, der Reihenschaltung eines Widerstandes 13 und eines Kondensators 14 sowie der Parallelschaltung eines Widerstandes 15 und eines Kondensators 16 gebildet ist, wobei diese Teile in gleicher Weise geschaltet sind wie bei dem Bandpaß 11.

Am Ausgang 18 des zweiten Bandpasses 17 tritt eine Spannung auf, deren Verlauf in Fig. 5 dargestellt ist. Diese Spannung f''(t) bildet die zweite Ableitung der Hüllkurve H und weist drei Nulldurchgänge auf, die der Reihe nach mit $N_1$, $N_2$ und $N_3$ bezeichnet sind. Diese Nulldurchgänge entsprechen zeitlich den drei Maxima des differenzierten Signals (Fig. 4).

Der Ausgang 10 des Bandpasses 11, an dem das differenzierte Signal auftritt, ist über einen Widerstand 19 mit dem N-Eingang eines Differenzverstärkers 20 verbunden, dessen P-Eingang über einen Widerstand 21 mit einer Spannungsquelle $U_s$ verbunden ist, die auf einen bestimmten Schwellwert S eingestellt ist. Ein Paar antiparallel geschalteter Dioden 22 und 23 ist parallel zu den Eingängen des Differenzverstärkers 20 geschaltet.

Die aus den Teilen 19 bis 23 bestehende Baugruppe bildet einen Spannungskomparator, an dessen Ausgang 24 nur so lange ein Ausgangssignal, etwa ein H-Pegel auftritt, solange der Ausgang 10 einen Pegel führt, der negativer ist als der Schwellwert S.

Der Ausgang 24 des Spannungskomparators 19-23 ist mit einem Eingang eines UND-Gatters 25 verbunden. Dieses UND-Gatter ist Teil der Stoppschaltung.

Die Schaltung umfaßt ferner einen Taktgeber 26, der an den einen Eingang eines UND-Gatters 42 angeschaltet ist.

Ferner ist noch eine Startschaltung 27 vorgesehen, die durch einen monostabilen Multivibrator gebildet ist, dessen Ausgang mit dem zweiten Eingang des UND-Gatters 42 verbunden ist. Der Eingang 28 der Startschaltung 27 ist über einen Kondensator 29 mit der Speiseschaltung für die Gitterleitungen, auch Stromleiter genannt, verbunden.

Der Ausgang 18 des zweiten Bandpasses 17 ist mit einer Diskriminatorschaltung verbunden, die als Spannungskomparator ausgebildet ist und einen Differenzverstärker 30, jeweils einen mit den Eingängen verbundenen Widerstand 31 und 32 sowie zwei antiparallel geschaltete und parallel zu dem Eingang liegende Dioden 33 und 34 umfaßt. Der Ausgang 18 ist über den Widerstand 32 mit dem P-Eingang des Differenzverstärkers verbunden, und der N-Eingang desselben führt über den Widerstand 31 an den Schleifer eines Potentiometers 35, dessen Endanschlüsse an eine negative bzw. positive Spannung angeschaltet sind, so daß sich eine Spannung im Bereich um den Nullpunkt einstellen läßt. Zusätzlich wird an den N-Eingang des Differenzverstärkers 30 über den Widerstand 44 noch eine Wechselspannungskomponente $U_w$ eingespeist, die sich synchron mit der Taktfrequenz der Magnetfeldimpulse ändert und die zur Feinkorrektur des durch den gegenseitigen endlichen Abstand der Stromleiter bedingten Meßfehler dient.

Der Ausgang der aus den Teilen 30 bis 34 bestehenden Diskriminatorschaltung 37 ist über einen Kondensator 36 mit dem zweiten Eingang des UND-Gatters 25 verbunden, dessen Ausgang mit dem Rückstelleingang 38 eines, Binärzählers 39 verbunden ist.

Ferner ist eine Anzeige- und/oder Speichereinrichtung 41 vorgesehen, die bei Empfang eines Rückstellsignals auf der Leitung 38 den an den Ausgängen Q1 bis Qn des Zählers 39 digital vorhandenen Zählwert in einen Speicher übernimmt.

Die Schaltung hat folgende Wirkungsweise.

Wenn der Meßaufnehmer mit der Wicklung 1 auf den Meßtisch gelegt ist und die in demselben befindlichen Gitterleitungen einzeln und nacheinander für eine bestimmte Zeitdauer mit Strom gespeist werden, entsteht ein Magnetfluß in der Wicklung 1, wie er in Fig. 2 schraffiert dargestellt ist. Am Ausgang der Wicklung 1 tritt daher eine Induktionsspannung entsprechend der Fig. 3 auf. Mittels der Sample and Hold-Schaltung 3 wird diese Spannung so umgewandelt, daß eine stufenförmige Ausgangsspannung entsteht, die praktisch eine Kurvenform hat entsprechend der in Fig. 3 punktiert teilweise gezeichneten Gestalt. Dieses Ausgangssignal wird durch den Tiefpaß 4 geglättet und erhält dann eine Kurvenform, die etwa der Hüllkurve H in Fig. 2 und auch H' in Fig. 3 entspricht. Dieses Signal wird durch die ansteigende Flanke des Bandpasses 11 differenziert, so daß am Ausgang 10 dieses Bandpasses ein differenziertes Signal entsprechend Fig. 4 auftritt. Dieses differenzierte Signal gelangt an den N-Eingang des Differenzverstärkers 20 und führt dann und nur dann zu einem H-Pegel am Ausgang 24 desselben, wenn die differenzierte Spannung negativer ist als die Schwellwertspannung $U_s$, die in Fig. 4 gestrichelt dargestellt ist. In diesem Zustand ist das UND-Gatter 25 für Signale an dem zweiten Eingang durchlässig.

Das an dem Ausgang 10 anliegende differenzierte Signal wird über den zweiten Bandpaß 17 differenziert, so daß am Ausgang desselben ein Wendepunktsignal auftritt, welches der zweiten Ableitung der Hüllkurve H, H' entspricht. Dieses Signal ist in Fig. 5 dargestellt. Mittels des Differenzverstärkers 30, dessen N-Eingang auf eine Spannung gleich oder nahe Null eingestellt ist, schaltet der Ausgangspegel dieses Differenzverstärkers jedesmal dann um, wenn die Spannung am Ausgang 18 diesen Pegel durchläuft. Diese Umschaltpunkte sind in Fig. 5 mit $N_1$, $N_2$ und $N_3$ bezeichnet. Der am N-Eingang des Differenzverstärkers 30 anliegende Pegel ist in Fig. 5 gestrichelt dargestellt (ohne Wechselspannungskomponente).

Jedesmal, wenn der Ausgangszustand des Differenzverstärkers 30 umgeschaltet wird, wird durch den Kondensator 36 ein Impuls an den zweiten Eingang des UND-Gatters 25 gegeben, und dieser Eingang wird an den Rückstelleingang 38 des Binärzählers 39 weitergeschaltet, solange der Ausgang 24 einen H-Pegel führt. Dadurch ist erreicht, daß der Pegeldurchgang an der Stelle $N_1$ von Fig. 5 nicht auf den Rückstelleingang 38 einwirkt, da ja während dieses Zeitpunktes der Ausgang 24 noch keinen H-Pegel führt.

Die Impulsdauer des monostabilen Multivibrators in der Startschaltung 27 ist größer gewählt als der zeitliche Abstand zweier aufeinanderfolgender Impulse auf der Leitung 2. Dadurch wird erreicht, daß die Startschaltung 27 so lange einen H-Pegel am Ausgang 43 führt, wie die Gitterleitungen mit Strom gespeist werden. Wahrend dieser Zeit gelangen auch Taktsignale des Taktgebers 26 durch das UND-Gatter 42 an den Zähleingang 40 des Binärzählers 39.

Der Beginn der Stromspeisung der Gitterleitung kann ebenfalls durch den Taktgeber 26 gesteuert oder synchronisiert werden, wobei auch eine bestimmte Zeitverzögerung oder Voreilung der Stromspeisung gegenüber den Taktsignalen durchgeführt werden kann, etwa zur Korrektur gewisser Schaltungseigenschaften.

Der Start des Binärzählers 39 erfolgt in diesem Fall also bei Auftreten des ersten Signals am Eingang 28 der Startschaltung 27, und der Zähler hört auf zu zählen und wird gleichzeitig zurückgestellt, wenn das UND-Gatter 25 einen dem Pegeldurchgang $N_2$ in Fig. 5 entsprechenden Impuls aus dem Differenzverstärker 30 durchläßt.

Es hat sich gezeigt, daß mit einer derartigen Schaltung eine genaue Bestimmung der betreffenden Ortskoordinate des Meßaufnehmers bis auf eine Toleranz von etwa 20 $\mu$m möglich ist. Ausserdem ist die Schaltung verhältnismäßig unempfindlich gegen Störeinflüsse.

Anstelle der Stromleiter können die Magnetfeldimpulse auch mit dem Meßaufnehmer erzeugt werden, wobei dann die Induktionsspannung von den Stromleitern nacheinander abgetastet wird. Die oben beschriebene Schaltung läßt sich auch hierfür verwenden, wobei dann statt der Meßspule 1 der die Stromleiter enthaltende Leitungskreis an die Leitung 2 angeschlossen wird.

**Ansprüche**

1. Verfahren zur Positionsbestimmung eines induktiven Meßaufnehmers auf einem Meßtisch, der für jede Koordinate mit einer Anzahl in festgelegten Abständen voneinander angeordneter und in vorbestimmter Folge und Richtung von gleichen Strömen durchflossenen Stromleitern versehen ist, wobei aus dem von dem Meßaufnehmer gelieferten Meßsignal ein für die Positionsbestimmung in der betreffenden Koordinate verwendeter Meßwert erzeugt wird, dadurch **gekennzeichnet,** daß ein der zweiten Ableitung der Hüllkurve (H) des zeitlichen Verlaufs des den Meßaufnehmer durchsetzenden Magnetflusses ($\Phi$) entsprechendes Wendepunktsignal (f''(t)) gebildet wird und daß der Zeitabstand des zweiten Durchgangs ($N_2$) dieses Wendepunktsignals (f''(t)) durch einen nahe Null gelegenen Pegel von einem in Abhängigkeit vom Beginn der Speisung der Stromleiter gestarteten Referenzsignal als Maß für die Position des Meßaufnehmers in der betreffenden Koordinatenrichtung verwendet wird.

2. Verfahren zur Positionsbestimmung eines induktiven Meßaufnehmers auf einem Meßtisch, der für jede Koordinate mit einer Anzahl in festgelegten Abständen voneinander angeordneter Stromleiter versehen ist, wobei dem Meßaufnehmer eine Stromsignalfolge zugeführt wird und die von dieser in den Stromleitern erzeugten Induktionssignale in vorbestimmter Folge und Richtung abgetastet werden und aus diesen Induktionssignalen eine Induktionssignal-Zeitfunktion gebildet wird, aus der ein für die Positionsbestimmung des Meßaufnehmers in der betreffenden Koordinate verwendeter Meßwert erzeugt wird, dadurch **gekennzeichnet,** daß ein der zweiten Ableitung der Hüllkurve (H) der Induktionssignal-Zeitfunktion entsprechendes Wendepunktsignal (f''(t)) gebildet wird und daß der Abstand des zweiten Durchganges (N2) dieses Wendepunktsignals (f''(t)) durch einen nahe Null gelegenen Pegel von einem in Abhängigkeit vom Beginn der Abtastung der Stromleiter gestarteten Referenzsignal als Maß für die Position des Meßaufnehmers in der betreffenden Koordinatenrichtung verwendet wird.

3. Verfahren nach Anspruch 1 oder 2, dadurch **gekennzeichnet,** daß der Zeitabstand des zweiten Nulldurchganges des Wendepunktsignals (f''(t)) von dem Referenzsignal als Maß für die Position verwendet wird.

4. Verfahren nach Anspruch 1 oder 2, dadurch **gekennzeichnet,** daß der nahe Null gelegene Pegel synchron zur Aktivierung der Stromleiter verändert wird.

5. Verfahren nach Anspruch 1 bis 4, wobei aus der Hüllkurve ein der ersten Ableitung der Hüllkurve (H) entsprechendes differenziertes Signal (f'(t)) gebildet wird, dadurch **gekennzeichnet,** daß der zweite Durchgang (N2) des Wendepunktsignals (f''(t)) durch einen nahe Null gelegenen Pegel in der Weise bestimmt wird, daß der erste Durchgang (N1) des Wendepunktsignals (f''(t)) durch diesen Pegel in dem Zeitraum bestimmt wird, in dem das differenzierte Signal (f'(t)) eine Amplitude hat, die oberhalb eines vorher festgelegten Schwellwertes S liegt.

6. Schaltung zur Positionsbestimmung eines induktiven Meßaufnehmers auf einem Meßtisch, der für jede Koordinate mit einer Anzahl in festgelegten Abständen voneinander angeordneter Stromleiter versehen ist, mit einer Schalteinrichtung zum Anschalten der Stromleiter in vorbestimmter Folge und Richtung an einen Leitungskreis, mit einer Erregerschaltung zum Erzeugen einer Folge von Magnetflußimpulsen durch den Meßaufnehmer oder die Stromleiter, und mit einer Auswerteschaltung zum Erzeugen des einmal differenzierten Signals (f'(t)) der Hüllkurve (H) der die Magnetflußimpulse repräsentierenden Teile der in den Stromleitern bzw. dem Meßaufnehmer induzierten Induktionsspannung, dadurch **gekennzeichnet,** daß die Auswerteschaltung eine zweite Differenzierschaltung (17) umfaßt, der das differenzierte Signal (f'(t)) zugeleitet wird und die ein Wendepunktsignal (f''(t)) bildet, welches der zweiten Ableitung der Hüllkurve (H) entspricht, sowie ferner eine Meßvorrichtung zum Messen des Zeitabstandes des zweiten Durchganges (N2) des Wendepunktsignals (f''(t)) durch einen nahe Null gelegenen Pegel von einem Referenzzeitpunkt, der einen festen Zeitabstand vom Beginn der Magnetflußimpulsfolge hat, und daß der von der Meßvorrichtung gemessene Zeitabstand als Maß für die Position verwendet wird.

7. Schaltung nach Anspruch 6, dadurch **gekennzeichnet,** daß die Meßvorrichtung so ausgebildet ist, daß sie den Zeitabstand des zweiten Nulldurchganges des Wendepunktsignals (f''(t)) von dem Referenzzeitpunkt mißt.

8. Schaltung nach Anspruch 6 oder 7, dadurch **gekennzeichnet,** daß die Meßvorrichtung eine von dem differenzierten Signal (f'(t)) gesteuerte Freigabeschaltung (19 - 23) aufweist, die nur so lange durchgeschaltet ist, wie die Amplitude des differenzierten Signals (f'(t)) einen bestimmten Schwellwert überschreitet, sowie ferner einen Taktgeber (26), einen Zähler (39) für die Taktimpulse des Taktgebers, eine Startschaltung (27, 42), die in einem festen Zeitabstand vom Beginn der Erzeugung der Magnetflußimpulse die Taktimpulse zu dem Zähler freigibt,durch eine Diskriminatorschaltung (37, 25), die ein Stoppsignal für den Zähler jedesmal dann erzeugt, wenn das Wendepunktsignal (f''(t)) einen vorher festgelegten, nahe Null liegenden Pegel durchläuft und wenn die Freigabeschaltung durchgeschaltet ist, sowie eine Anzeige- oder Speichereinrichtung (41) für den Zählwert.

9. Schaltung nach Anspruch 8, dadurch **gekennzeichnet,** daß die Diskriminatorschaltung (37, 25) so ausgebildet ist, daß ein Stoppsignal beim Nulldurchgang des Wendepunktsignals (f''(t)) erzeugt wird.

10. Schaltung nach Anspruch 8, dadurch **gekennzeichnet,** daß die Diskriminatorschaltung so ausgebildet ist, daß ein Stoppsignal bei Gleichheit des Wendepunktsignals (f''(t)) mit einem synchron zur Aktivierung der Stromleiter fluktuierenden Signal erzeugt wird.

11. Schaltung nach Anspruch 6 bis 10, dadurch **gekennzeichnet,** daß die Differenzierschaltungen als Bandpässe ausgebildet sind.

12. Schaltung nach Anspruch 8 bis 11, dadurch **gekennzeichnet,** daß der Schwellwert (S) einen Wert zwischen 10 und 60% des Maximums der zweiten Halbwelle des differenzierten Signals hat.

## Claims

1. A method of determining the position of an inductive sensor on a measuring table which, for each coordinate, is provided with a number of conductors spaced apart at fixed intervals and flowed through by equal currents in a predetermined sequence and direction, the measuring signal delivered by the sensor being used to obtain a measured value for determining the position along the respective coordinate, characterised in that a turning-point signal (f''(t)) corresponding to the second derivative of the wave curve (H) of the variation in time of the magnetic flux ($\Phi$) through the sensor is formed and the time interval between the second transit (N$_2$) of the turning-point signal (f''(t)) through a near-zero level and a reference signal started in dependence on the beginning of energisation of the conductors is used to measure the position of the sensor in the respective coordinate direction.

2. A method of determining the position of an inductive sensor on a measuring table which, for each coordinate, is provided with a number of conductors spaced apart at fixed intervals, the sensor being supplied with a sequence of current signals and the induction signals generated thereby in the conductors being scanned in a predetermined sequence and direction and used to obtain an induction-signal time function in order to generate a measured value for determining the position of the sensor along the respective coordinate, characterised in that a turning-point signal (f''(t)) corresponding to the second derivative of the wave curve (H) of the induction-signal time function is formed and the interval between the second transit (N$_2$) of the turning-point signal (f''(t)) through a near-zero level and a reference signal started in dependence on the beginning of scanning the conductors is used for measuring the position of the sensor in the respective coordinate direction.

3. A method according to claim 1 or 2, characterised in that the time interval between the second zero-axis crossing of the turning-point signal (f''(t)) and the reference signal is used to measure the position.

4. A method according to claim 1 or 2, characterised in that the near-zero level is altered in synchronism with the activation of the conductors.

5. A method according to claims 1 to 4, in which a differentiated signal (f'(t)) corresponding to the first derivative of the wave curve (H) is formed from the wave curve, characterised in that the second transit (N$_2$) of the turning-point signal (f''(t)) through a near-zero level is determined as follows: the first transit (N$_1$) of the turning-point signal (f''(t)) through the level is determined at the instant when the differentiated signal (f'(t)) has an amplitude above a predetermined threshold value (S).

6. A circuit for determining the position of an inductive sensor on a measuring table which, for each coordinate, is provided with a number of conductors spaced apart at fixed intervals, the circuit comprising a device for connecting the conductors to a circuit in a predetermined sequence and direction, and also comprising an energizing circuit for generating a series of magnetic flux pulses through the sensor or the conductors, and an evaluating circuit for generating the once-differentiated signal (f'(t)) of the wave curve (H) of the parts of the induction voltage induced in the conductors or sensor and representing the magnetic flux pulses, characterised in that the evaluating circuit comprises a second differentiating circuit (17) which is supplied with the differentiated signal (f'(t)) and which forms a turning-point signal (f''(t)) which corresponds to the second derivative of the wave curve (H), and also comprises a measuring device for measuring the time interval between the second transit (N$_2$) of the turning-point signal (f''(t)) through a near-zero level and a reference instant at a fixed time interval after the beginning of the sequence of magnetic flux pulses, and the time interval measured by the measuring device is used to measure the position.

7. A circuit according to claim 6, characterised in that the measuring device is constructed so as to measure the time interval between the second zero-axis crossing of the turning-point signal (f''(t)) and the reference instant.

8. A circuit according to claim 6 or 7, characterised in that the measuring device comprises a release circuit (19 - 23) controlled by the differential signal (f'(t)) and switched through only as long as the amplitude of the differentiated signal (f'(t)) exceeds a given threshold value, and also comprises a clock generator (26), a counter (39) of the clock pulses of the clock generator, and a starting circuit (27, 42) which, at a fixed time interval after the beginning of generation of the magnetic flux pulses, releases the clock pulses to the counter via a discriminator circuit (37, 25), which generates a signal stopping the counter whenever the turning-point signal (f''(t)) crosses a predetermined near-zero level and whenever the release circuit is switched through, the device also comprising means (41) for displaying or storing the counter reading.

9. A circuit according to claim 8, characterised in that the discriminator circuit (37, 25) is constructed so that a stopping signal is generated during the zero-axis crossing of the turning-point signal (f''(t)).

10. A circuit according to claim 8, characterised in that the discriminator circuit is constructed so that a stopping signal is generated when the turning-point signal (f'(t)) is equal to a synchronously fluctuating signal for activating the conductors.

11. A circuit according to claims 6 - 10, characterised in that the differentiating circuits are in the form of band-pass filters.

12. A circuit according to claims 8 - 11, characterised in that the threshold value (S) has a value between 10 and 60% of the maximum of the second half-wave of the differentiated signal.

## Revendications

1. Procédé de détermination de la position d'un capteur inductif sur une planchette, qui est munie pour chaque coordonnée d'un certain nombre de conducteurs placés à des distances fixées les uns des autres et parcourus par les mêmes courants dans un ordre et un sens prédéterminé, une valeur de mesure utilisée pour la détermination de la position sur la coordonnée correspondante étant produite à partir du signal de mesure délivré par le capteur, caractérisé en ce qu'il se forme un signal de point d'inversion [f''(t)] correspondant à la seconde dérivation de la courbe enveloppe (H) de l'allure dans le temps du flux magnétique (Φ) traversant le capteur et en ce que l'intervalle de temps du deuxième passage (N₂) de ce signal de point d'inversion [f''(t)] par un niveau placé près de zéro par rapport à un signal de référence démarré en fonction du début de l'alimentation des conducteurs, est utilisé comme mesure pour la position du capteur dans le sens correspondant des coordonnées.

2. Procédé de détermination de la position d'un capteur inductif sur une planchette, qui est munie pour chaque coordonnée d'un certain nombre de conducteurs placés à des distances fixées les uns des autres, une suite de signaux de courant étant amenée au capteur et les signaux d'induction produits par celle-ci dans les conducteurs étant explorés dans un ordre et un sens prédéterminé et une fonction du temps du signal d'induction étant formée à partir de ces signaux d'induction, fonction à partir de laquelle est produite une valeur mesurée utilisée pour la détermination de la position du capteur sur la coordonnée considérée, caractérisé en ce qu'il se forme un signal de point d'inversion [f''(t)] correspondant à la deuxième dérivation de la courbe enveloppe de la fonction du temps du signal d'induction et en ce que l'intervalle du deuxième passage (N₂) de ce signal de point d'inversion [f''(t)] par un niveau placé près de zéro par rapport à un signal de référence démarré en fonction du début de la détection des conducteurs est utilisé comme mesure pour la position du capteur dans le sens correspondant des coordonnées.

3. Procédé selon les revendications 1 ou 2, caractérisé en ce que l'intervalle de temps du deuxième passage par zéro du signal de point d'inversion [f''(t)] par rapport au signal de référence est utilisé comme mesure pour la position.

4. Procédé selon les revendications 1 ou 2, caractérisé en ce que le niveau situé près de zéro est changé en synchronisme avec l'activation des conducteurs.

5. Procédé selon les revendication 1 à 4, dans lequel à partir de la courbe enveloppe est formé un signal [f'(t)] différentié correspondant à la première dérivation de la courbe enveloppe (4), caractérisé en ce que le deuxième passage (N₂) du signal de point d'inversion [f''(t)] par un niveau situé près de zéro est déterminé de manière, que le premier passage (N₁) du signal de point d'inversion [f''(t)] est déterminé par ce biveau dans l'intervalle de temps, dans lequel le signal différentié [f'(t)] a une amplitude, qui est située au-dessus d'une valeur de seuil fixée auparavant.

6. Circuit pour déterminer la position du capteur inductif sur une planchette, munie pour chaque coordonnée d'un certain nombre de conducteurs placés à des distances fixées les uns des autres avec un dispositif de commutation pour le branchement des conducteurs dans un ordre et un sens préfixé sur un circuit conducteur, avec un circuit d'excitation pour engendrer une série d'impulsions de flux magnétique à travers le capteur ou les conducteurs, et avec un circuit d'évaluation pour créer le signal [f'(t)] différentié une fois de la courbe enveloppe (H) des parties représentants les impulsions du flux magnétique de la tension d'induction induite dans les conducteurs ou le capteur, caractérisé en ce que le circuit d'évaluation comprend un circuit de seconde différentiation (17), auquel est amené le signal différentié [f'(t)], correspondant à la seconde dérivation de la courbe enveloppe (H), ainsi qu'en outre un dispositif de mesure pour mesurer l'intervalle de temps du deuxième passage (N₂) du signal de point d'inversion [f''(t)] par un niveau situé près de zéro par rapport à un instant de référence qui a un intervalle de temps fixe par rapport au début de la série d'impulsions de flux magnétique et en ce que l'intervalle de temps mesuré par le dispositif de mesure est utilisé comme mesure pour la position.

7. Circuit selon la revendication 6, caractérisé en ce que le dispositif de mesure est réalisé de façon qu'il puisse mesurer l'intervalle de temps du deuxième passage au zéro du signal de point d'inversion [f''(t)] par rapport à l'instant de référence.

8. Circuit selon les revendications 6 ou 7, caractérisé en ce que le dispositif de mesure comporte un circuit de libération commandé par le signal différentié [f'(t)], qui est connecté seulement aussi longtemps que l'amplitude du signal différentié [f'(t)] dépasse une valeur de seuil déterminée, ainsi qu'en outre un générateur de cadence (26), un compteur (39) pour les impulsions de synchronisation du générateur de cadence, un circuit de démarrage (27, 42), qui libère dans un intervalle de temps fixe depuis le début de la production des impulsions de flux magnétique les impulsions de synchronisation ou compteur, par un circuit discriminateur (37, 25), qui produit un signal d'arrêt pour le compteur chaque fois, que le signal de point d'inversion [f''(t)] passe au niveau fixé précédemment, situé près de zéro et que le circuit de libération est connecté, ainsi qu'un dispositif d'information ou de mémoire (41) pour la valeur de comptage.

9. Circuit selon la revendication 8, caractérisé en ce que le circuit discriminateur (37, 25) est réalisé de façon qu'un signal d'arrêt est produit au passage par zéro du signal de point d'inversion [f''(t)].

10. Circuit selon la revendication 8, caractérisé en ce que le circuit discriminateur est réalisé de façon qu'un signal d'arrêt est produit en uniformité du signal du point d'inversion [f''(t)] avec un signal fluctuant de façon synchrone pour l'activation des conducteurs.

11. Circuit selon les revendications 6 à 10, caractérisé en ce que les circuits différentiels sont réalisés en passe-bande.

12. Circuit selon les revendications 8 à 11, caractérisé en ce que la valeur de seuil (S) a une grandeur comprise entre 10 et 60 % du maximum de la deuxième demi-onde du signal différentié.

Fig.1

Fig.2

Fig.3

Fig.4

Fig.5